(19) Europäisches Patentamt
European Patent Office
Office européen des brevets

(11) **EP 4 756 908 A1**

(12) **EUROPEAN PATENT APPLICATION**
published in accordance with Art. 153(4) EPC

(43) Date of publication:
**10.06.2026  Bulletin 2026/24**

(21) Application number: **24850845.9**

(22) Date of filing: **29.07.2024**

(51) International Patent Classification (IPC):
$H01M\ 4/36$ (2006.01)     $H01M\ 4/62$ (2006.01)
$H01M\ 4/48$ (2010.01)     $H01M\ 4/58$ (2010.01)
$H01M\ 4/13$ (2010.01)

(52) Cooperative Patent Classification (CPC):
H01M 4/13; H01M 4/36; H01M 4/48; H01M 4/58;
H01M 4/62; Y02E 60/10

(86) International application number:
**PCT/CN2024/108241**

(87) International publication number:
**WO 2025/031197 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **04.08.2023  CN 202310980528**

(71) Applicant: **Ningde Amperex Technology Limited
Ningde, Fujian 352100 (CN)**

(72) Inventor: **LI, Dalu
Ningde, Fujian 352100 (CN)**

(74) Representative: **Dehns Germany Partnerschaft
mbB
Theresienstraße 6-8
80333 München (DE)**

(54) **NEGATIVE ELECTRODE ACTIVE MATERIAL, BATTERY, AND ELECTRIC DEVICE**

(57)    A negative electrode active material, a battery, and an electric device are disclosed, and relate to the battery field. A particle size $D_v50$ of the negative electrode active material is a μm, a specific surface area is b $m^2/g$, and $20 \leq 2.5 \times a + b \leq 40$. The battery includes a positive electrode plate, a negative electrode plate, and an electrolyte, where the negative electrode plate includes a negative electrode current collector and a negative electrode active material layer disposed on at least one surface of the negative electrode current collector, the negative electrode active material layer including the above negative electrode active material. The negative electrode active material, the battery, and the electric device of embodiments of the present application can improve the low-temperature discharge capability of the battery and increase the low-temperature discharge capacity retention rate thereof.

FIG. 1

EP 4 756 908 A1

## Description

The present application claims priority to Chinese Patent Application No. 202310980528.9, filed on August 4, 2023, and entitled "NEGATIVE ELECTRODE ACTIVE MATERIAL, NEGATIVE ELECTRODE PLATE, BATTERY, AND ELECTRIC DEVICE," the entire contents of which are incorporated herein by reference.

## TECHNICAL FIELD

The present application relates to the battery field, and specifically to a negative electrode active material, a battery, and an electric device.

## BACKGROUND

At present, as the ambient temperature decreases, the internal polarization of cells of lithium-ion batteries increases, and the 10C high-rate discharge capability or higher gradually declines. However, electric tools, unmanned aerial vehicles, and other electric devices need to operate continuously at low temperatures, thus imposing strict requirements on low-temperature high-rate discharge capabilities. Conventional methods to improve the low-temperature discharge capability involve reducing the internal resistance of the cell (for example, through thin coating of electrode plates), but this approach often leads to a loss of energy density, resulting in insufficient endurance for electric tools, unmanned aerial vehicles, and other electric equipment.

## SUMMARY

In view of the above issues, the present application provides a negative electrode active material, a battery, and an electric device, which can improve the low-temperature discharge capability of the battery and increase the low-temperature discharge capacity retention rate.

According to a first aspect, the present application provides a negative electrode active material, where a particle size $D_v50$ of the negative electrode active material is a $\mu$m, a specific surface area BET is b $m^2/g$, and $20 \leq 2.5 \times a + b \leq 40$.

In the technical solution of some embodiments of the present application, the particle size and specific surface area of the negative electrode active material satisfy the relationship: $20 \leq 2.5 \times a + b \leq 40$. The negative electrode active material satisfying this condition can achieve dense particle packing, and electrons can conduct between particles, thereby balancing the roles of ion diffusion and the electron conduction network. This provides a good conductive network, reduces charge conduction impedance, and thus improves the low-temperature discharge capability of the battery, improving the low-temperature high-rate discharge capability of the battery, and increasing the low-temperature discharge capacity retention rate.

In some embodiments, $25 \leq 2.5 \times a + b \leq 35$. This can further increase the low-temperature discharge capacity retention rate of the battery.

In some embodiments, $2 \leq a \leq 10$; and optionally, $2 \leq a \leq 8$. The negative electrode active material has the characteristic of small particle size, enabling dense particle packing, which allows the battery to achieve a relatively high low-temperature discharge capacity retention rate.

In some embodiments, $10 \leq b \leq 25$; and optionally, $13 \leq b \leq 20$. The negative electrode active material has the characteristic of a large specific surface area, enabling electrons to conduct rapidly within and on the surface of the particles, thereby improving the low-temperature discharge capability of the battery.

In some embodiments, a tap density of the negative electrode active material is T $g/cm^3$, and $0.3 \leq T - 0.05 \times a \leq 1.0$; and optionally, $0.5 \leq T - 0.05 \times a \leq 0.8$. The particle size and tap density of the negative electrode active material also satisfy the relationship: $0.3 \leq T - 0.05 \times a \leq 1.0$. The negative electrode active material can have a small particle size and good tap density, resulting in good electron conductivity between particles and increasing the low-temperature discharge capacity retention rate.

In some embodiments, $0.5 \leq T \leq 1.4$; and optionally, $0.9 \leq T \leq 1.2$. The negative electrode active material has the characteristic of high tap density, which can further improve electron conduction between particles and improve the low-temperature discharge capability of the battery.

In some embodiments, a graphitization degree of the negative electrode active material is G %, and $94.0 \leq G \leq 98.5$; and optionally, $95.0 \leq G \leq 97.5$. The negative electrode active material has a high graphitization degree, providing a good electron conduction function. Additionally, a higher graphitization degree makes the particles softer, allowing a higher compacted density even with small particle sizes, and further improving the low-temperature discharge capability of the battery.

In some embodiments, a compacted density of the negative electrode active material is P $g/cm^3$, and $1.75 \leq P \leq 2.20$; and optionally, $1.90 \leq P \leq 2.10$. The negative electrode active material has a relatively high compacted density, which can improve electron conduction between particles, further improving the low-temperature discharge capability of the battery.

In some embodiments, a Raman Id/Ig range of the negative electrode active material is 0.1 to 0.35. The negative electrode active material has a good graphitization degree, and its particle surface Raman Id/Ig range is 0.1 to 0.35, allowing electrons to conduct rapidly within and on the surface of the particles, and improving the low-temperature discharge capability of the battery.

In some embodiments, the negative electrode active material includes a flaky structure material, and a mass proportion of the flaky structure material in the negative electrode active material is 90% to 100%. The flaky structure material has a large specific surface area and complete crystal structure, providing good conductivity within and between particles, thereby improving the low-temperature discharge capability of the battery and increasing the low-temperature discharge capacity retention rate of the battery.

In some embodiments, the negative electrode active material includes at least one of artificial graphite, natural graphite, silicon-carbon material, or silicon-oxygen material. Optionally, the negative electrode active material includes graphite with a surface coated with soft carbon or hard carbon. Optionally, the negative electrode active material includes flaky graphite with a surface coated with soft carbon or hard carbon, where the flaky graphite with a surface coated with soft carbon or hard carbon has a complete crystal growth, high graphitization degree, a small amount of surface defects, and allows rapid electron conduction within particles. Additionally, the high specific surface area ensures good contact between particles, resulting in a good electron conduction network throughout the electrode plate.

According to a second aspect, the present application provides a battery including a positive electrode plate, a negative electrode plate, and an electrolyte, where the negative electrode plate includes a negative electrode current collector and a negative electrode active material layer disposed on at least one surface of the negative electrode current collector, the negative electrode active material layer including the negative electrode active material described in the above embodiments. The battery using the negative electrode active material described in the above embodiments has good kinetic performance and relatively low impedance, and can sustain high-rate discharge at low temperatures.

In some embodiments, under a load of 25 MPa, the negative electrode plate has a conductivity of 1 S/cm to 10 S/cm; and optionally, the conductivity is 5 S/cm to 10 S/cm. The negative electrode active material has a good electron conduction function, and the formed negative electrode plate also has an excellent electron conduction network.

In some embodiments, an OI value of the negative electrode plate ranges from 11 to 21.

According to a third aspect, the present application provides an electric device including the battery described in the above embodiments, where the battery is used to provide electric energy.

The above description is only an overview of the technical solution of the present application. To enable a clearer understanding of the technical means of the present application, it can be implemented in accordance with the contents of the specification. To make the above and other objectives, features, and advantages of the present application more apparent and understandable, specific embodiments of the present application are provided below.

## BRIEF DESCRIPTION OF DRAWINGS

By reading the detailed description of the preferred embodiments below, various other advantages and benefits will become clear to those skilled in the art. The drawings are only for the purpose of illustrating the preferred embodiments and are not considered to limit the present application. Moreover, throughout all drawings, the same reference signs denote the same components. In the drawings:

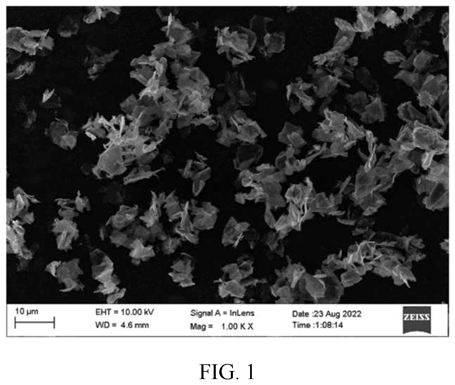

FIG. 1 is an SEM image of a negative electrode active material in Example 1-1.

## DETAILED DESCRIPTION

Some embodiments of the technical solution of the present application will be described in detail below in conjunction with the drawings. The following embodiments are only used to more clearly illustrate the technical solution of the present application and are merely exemplary, not intended to limit the scope of protection of the present application.

Unless otherwise defined, all technical and scientific terms used herein have the same meanings as commonly understood by those skilled in the technical field of the present application; the terms used herein are only for the purpose of describing specific embodiments and are not intended to limit the present application; and the terms "include" and "have" and any variations thereof in the specification, claims, and the above description of the drawings of the present application are intended to cover non-exclusive inclusion.

In the description of these embodiments of the present application, technical terms such as "first" and "second" are only used to distinguish different objects and should not be understood as indicating or implying relative importance or implicitly indicating the number, specific order, or primary-secondary relationship of the indicated technical features. In the description of these embodiments of the present application, "multiple" means two or more, unless otherwise explicitly and specifically defined.

Reference to "embodiment" herein means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that these embodiments described herein can be combined with other embodiments.

In the description of these embodiments of the present application, the term "multiple" refers to two or more (including two); similarly, "multiple groups" refers to two or more groups (including two groups), and "multiple pieces" refers to two or more pieces (including two pieces).

In the description of these embodiments of the present application, technical terms such as "inner" and "outer" indicating orientation or positional relationships are based on the orientation or positional relationships shown in the drawings, solely for the convenience of describing these embodiments of the present application and simplifying the description, and do not indicate or imply that the referred means or element must have a specific orientation, be constructed, or operate in a specific orientation, and thus should not be construed as limiting these embodiments of the present application.

In the description of these embodiments of the present application, unless otherwise explicitly specified and defined, technical terms such as "mounting," "connecting," and "fixing" should be understood in a broad sense, for example, as fixed connections, detachable connections, or integral formations; mechanical connections or electrical connections; direct connections or indirect connections through an intermediate medium; or internal communication or interaction between two elements. Those skilled in the art can understand the specific meanings of the above terms in these embodiments of the present application based on specific circumstances.

At present, from the perspective of market development, the application of power batteries is becoming increasingly widespread. Power batteries are not only used in energy storage systems such as hydroelectric, thermal, wind, and solar power stations but are also widely applied in electric vehicles such as electric bicycles, electric motorcycles, and electric cars, as well as in military equipment, aerospace, and other fields. With the continuous expansion of power battery application fields, the market demand is also continuously increasing.

The high-rate discharge capability of secondary batteries under low-temperature conditions depends on their polarization. When the polarization voltage falls below the discharge cut-off voltage, the secondary battery cannot be discharged. The low-temperature high-rate discharge capability of existing lithium-ion secondary batteries is poor; and as the ambient temperature decreases, the internal polarization of the battery increases, and the high-rate discharge capability gradually declines. However, electric tools, unmanned aerial vehicles, and other electric devices need to operate continuously at low temperatures, imposing strict requirements on the low-temperature high-rate discharge capability of batteries.

Conventional methods to improve the low-temperature high-rate discharge capability of batteries involve reducing the internal resistance of the battery (for example, through thin coating of electrode plates), but this approach often leads to a loss of energy density of the battery, resulting in insufficient endurance for electric tools, unmanned aerial vehicles, and other electric equipment, as well as increased manufacturing costs.

To alleviate the issue of low low-temperature discharge capability of the battery, the applicant has found through research that charge conduction impedance (1s DCR) caused by low temperatures is one of the key factors affecting low-temperature discharge of the battery. By using specifically selected negative electrode active materials to form electrode plates, a good conductive network can be provided for the electrode plates, reducing charge conduction impedance, thereby improving the low-temperature discharge capability of the battery while increasing the low-temperature discharge capacity retention rate.

The battery cell disclosed in some embodiments of the present application may be used in electric devices including but not limited to vehicles, ships, and aircraft. A power supply system including the battery cell or battery disclosed in the present application can be used to mitigate and automatically adjust the deterioration of cell expansion force, replenish electrolyte consumption, and improve the stability of battery performance and service life of the battery.

Some embodiments of the present application provide an electric device using a battery as a power source, where the electric device can be, but is not limited to, mobile phones, tablets, laptops, electric toys, electric tools, electric bicycles, electric vehicles, ships, and spacecraft. Electric toys may include fixed or mobile electric toys, such as game consoles, electric car toys, electric ship toys, and electric airplane toys. Spacecraft may include airplanes, rockets, space shuttles, and spaceships.

For ease of explanation, the following embodiments take a battery in an embodiment of the present application as an example for description.

According to some embodiments of the present application, the present application provides a negative electrode active material, where the particle size $D_v50$ of the negative electrode active material is a $\mu$m, the specific surface area BET is b m$^2$/g, and $20 \leq 2.5 \times a + b \leq 40$.

The particle size $D_v50$ and specific surface area BET of the negative electrode active material refer to characteristic parameters of the particle collection. $D_v50$ refers to the particle size (particle diameter) corresponding to a cumulative volume of 50% in the volume-based particle size distribution of the negative electrode active material, measured from the smallest particle diameter, where a is the value of particle size $D_v50$ in $\mu$m. The specific surface area BET refers to the total surface area per unit mass of the particles, where b is the value of the specific surface area BET in $m^2/g$.

The value of a for the particle size $D_v50$ and the value of b for the specific surface area of the negative electrode active material in the present application satisfy the relationship: $20 \leq 2.5 \times a + b \leq 40$. The negative electrode active material can balance the roles of ion diffusion and the electron conduction network, thereby providing a good conductive network, improving the low-temperature discharge capability of the battery, and increasing the low-temperature discharge capacity retention rate. According to some embodiments of the present application, $25 \leq 2.5 \times a + b \leq 35$, which can further increase the low-temperature discharge capacity retention rate of the battery. For example, the relationship $2.5 \times a + b$ of the particle size $D_v50$ and specific surface area BET of the negative electrode active material may take values of 20, 22, 24, 25, 26, 28, 30, 32, 34, 35, 36, 38, 40, or any intermediate value between any two of these values.

According to some embodiments of the present application, $2 \leq a \leq 10$; and optionally, $2 \leq a \leq 8$. The negative electrode active material has the characteristic of small particle size, enabling dense particle packing and improving electron conduction, and resulting in a relatively high low-temperature discharge capacity retention rate for the battery. The $D_v50$ particle size of the material can be controlled by adjusting crushing parameters, for example, the particle size $D_v50$ of the negative electrode active material may be 2 $\mu$m, 4 $\mu$m, 6 $\mu$m, 8 $\mu$m, 10 $\mu$m, or any intermediate particle size value between any two of these particle size values.

According to some embodiments of the present application, $10 \leq b \leq 25$; and optionally, $13 \leq b \leq 20$. The negative electrode active material has the characteristic of a large specific surface area, enabling electrons to conduct rapidly within and on the surface of the particles, thereby improving the low-temperature discharge capability of the battery. The specific surface area BET of the material can be controlled by adjusting shaping parameters and graphitization process parameters, for example, the specific surface area BET of the negative electrode active material may be 10 $m^2/g$, 12 $m^2/g$, 13 $m^2/g$, 14 $m^2/g$, 15 $m^2/g$, 16 $m^2/g$, 18 $m^2/g$, 20 $m^2/g$, 22 $m^2/g$, 24 $m^2/g$, 25 $m^2/g$, or any intermediate specific surface area value between any two of these specific surface area values.

According to some embodiments of the present application, the tap density of the negative electrode active material is T $g/cm^3$, and $0.3 \leq T - 0.05 \times a \leq 1.0$; and optionally, $0.5 \leq T - 0.05 \times a \leq 0.8$. This indicates that even with a relatively small particle size, the negative electrode active material can simultaneously have a large specific surface area and good tap density. During the coating process of the electrode plate, the particles of the negative electrode active material can be densely packed, enhancing the lithium intercalation capability of the electrode plate and ensuring good electron conductivity between particles, resulting in a relatively high low-temperature discharge capacity retention rate for the battery. For example, $T - 0.05 \times a$ may be 0.3, 0.4, 0.5, 0.6, 0.7, 0.8, 0.9, 1.0, or any intermediate value between any two of these values. Tap density refers to the average density of all particles after tapping.

According to some embodiments of the present application, $0.5 \leq T \leq 1.4$; and optionally, $0.9 \leq T \leq 1.2$. The negative electrode active material has the characteristic of high tap density, which can further improve electron conduction between particles and improve the low-temperature discharge capability of the battery. The tap density of the material can be controlled by shaping, for example, the tap density of the negative electrode active material may be 0.5 $g/cm^3$, 0.6 $g/cm^3$, 0.7 $g/cm^3$, 0.8 $g/cm^3$, 0.9 $g/cm^3$, 1.0 $g/cm^3$, 1.1 $g/cm^3$, 1.2 $g/cm^3$, 1.4 $g/cm^3$, or any intermediate tap density value between any two of these tap density values.

According to some embodiments of the present application, the graphitization degree of the negative electrode active material is G %, and $94.0 \leq G \leq 98.5$; and optionally, $95.0 \leq G \leq 97.5$. The negative electrode active material has a high graphitization degree, providing a good electron conduction function. Additionally, a higher graphitization degree makes the particles softer, allowing a higher compacted density even with small particle sizes, and further improving the low-temperature discharge capability of the battery. The graphitization degree of the material can be controlled by adjusting graphitization process parameters during treatment of the material, for example, the graphitization degree of the negative electrode active material may be 94%, 94.5%, 95.5%, 96%, 96.5%, 97%, 97.5%, 98.5%, or any intermediate value between any two of these values.

According to some embodiments of the present application, the compacted density of the negative electrode active material is P $g/cm^3$, and $1.75 \leq P \leq 2.20$; and optionally, $1.90 \leq P \leq 2.10$. The compacted density of the negative electrode active material is tested at a tonnage of 5.0 tons. The negative electrode active material has a relatively high compacted density, which can improve electron conduction between particles, shorten the transmission path of active ions, and further improve the low-temperature discharge capability of the battery. For example, P $g/cm^3$ may take values of 1.75 $g/cm^3$, 1.80 $g/cm^3$, 1.90 $g/cm^3$, 1.95 $g/cm^3$, 2.00 $g/cm^3$, 2.05 $g/cm^3$, 2.10 $g/cm^3$, 2.20 $g/cm^3$, or any intermediate value between any two of these values.

According to some embodiments of the present application, the Raman Id/Ig range of the negative electrode active material is 0.1 to 0.35, indicating high crystallinity and low defects, allowing electrons to conduct rapidly within and on the surface of the particles, and improving the low-temperature discharge capability of the battery. The Raman Id/Ig of the material can be controlled by adjusting graphitization process parameters and coating parameters during treatment of the material, for example, the Raman Id/Ig of the negative electrode active material may be 0.1, 0.15, 0.2, 0.25, 0.3, 0.35, or any intermediate value between any two of these values.

According to some embodiments of the present application, the negative electrode active material includes a flaky structure material, and the mass proportion of the flaky structure material in the negative electrode active material is 90% to 100%. The flaky structure material has a large specific surface area and complete crystal structure, providing good conductivity within and between particles, and enabling the negative electrode active material to meet the above relationship conditions, thereby improving the low-temperature discharge capability of the battery and increasing the low-temperature discharge capacity retention rate of the battery. For example, the mass proportion of the flaky structure material may be 90%, 92%, 95%, 98%, 99%, 99.99%, or any intermediate value between any two of these values. The flaky structure material refers to a negative electrode active material in a flaky form, having two opposing surfaces with a small thickness difference between them.

According to some embodiments of the present application, the negative electrode active material includes, but is not limited to, at least one of carbon materials (artificial graphite, natural graphite, soft carbon, hard carbon, mesocarbon microbeads, carbon fibers, carbon nanotubes, graphene, or the like), titanium oxide-based materials (lithium titanate, titanium dioxide, or the like), alloy-type negative electrode materials (silicon-based materials (silicon-oxygen materials and/or silicon-carbon materials), tin-based materials, germanium-based materials, or the like), conversion-type negative electrode materials (transition metal oxides, phosphides, sulfides, nitrides, or the like). Optionally, the negative electrode active material includes graphite with a surface coated with soft carbon or hard carbon, where the mass proportion of soft carbon or hard carbon is 3% to 5% based on the mass of graphite. Optionally, the negative electrode active material includes flaky graphite with a surface coated with soft carbon or hard carbon.

According to some embodiments of the present application, the present application provides a preparation method of a negative electrode active material, including the following steps:

S1: Provide a raw material of the negative electrode active material, for example, use flaky graphite with a purity of 90% or higher as a raw material.

S2: Crush the raw material to a particle size $D_v50$ of a' $\mu$m.

S3: Shape the crushed raw material to a specific surface area of b' $m^2/g$ and a tap density of T' $g/cm^3$, where $20 \leq 2.5 \times a' + b' \leq 40$ is satisfied, and optionally $0.3 \leq T' - 0.05 \times a' \leq 1.0$.

S4: Mix the raw material obtained in S3 with a coating agent in a specific proportion and perform heat treatment in a reactor.

In one embodiment, the heat treatment temperature is 400°C to 700°C, and the heat treatment time is 2 h to 8 h. For example, the heat treatment temperature may be 400°C, 500°C, 600°C, 700°C, or any intermediate temperature between any two of these temperatures, and the heat treatment time may be 2 h, 3 h, 4 h, 5 h, 6 h, 7 h, 8 h, or any intermediate time between any two of these times.

In one embodiment, the coating agent may be a pitch-based coating agent; and the mixing ratio of the raw material to the coating agent is 90%-98%:10%-2%, for example, 90%:10%, 93%:7%, 95%:5%, 98%:2%, or any intermediate ratio between any two of these ratios.

S5: Perform graphitization treatment on the sample obtained in S4 to achieve more complete crystal growth, and control the graphitization degree of the treated sample to G % and the Raman Id/Ig value.

In one embodiment, the graphitization treatment temperature is 2000°C to 3000°C, and the graphitization treatment time is 20 h to 40 h. For example, the graphitization treatment temperature may be 2000°C, 2200°C, 2400°C, 2600°C, 2800°C, 3000°C, or any one between any two of these temperatures, and the graphitization treatment time may be 20 h, 24 h, 28 h, 30 h, 32 h, 34 h, 36 h, 38 h, or 40 h.

S6: Sieve and demagnetize the sample in S5 to obtain a negative electrode active material.

Since the parameters (particle size $D_v50$, specific surface area, and tap density) of the negative electrode active material change little compared to the corresponding parameters of the raw material, controlling the parameters of the raw material to meet the above conditions ensures that the parameters of the negative electrode active material meet the conditions. Specifically, the prepared negative electrode active material has a particle size $D_v50$ of a $\mu$m, a specific surface area of b $m^2/g$, a tap density of T $g/cm^3$, and satisfies $20 \leq 2.5 \times a + b \leq 40$, and optionally $0.3 \leq T - 0.05 \times a \leq 1.0$.

According to some embodiments of the present application, the present application also provides a battery including a positive electrode plate, a negative electrode plate, and an electrolyte, where the negative electrode plate includes a negative electrode current collector and a negative electrode active material layer disposed on at least one surface of the negative electrode current collector, the negative electrode active material layer including the negative electrode active material described in any of the above embodiments. The battery of the present application has good kinetic performance and relatively low impedance, and can sustain high-rate discharge at low temperatures.

The negative electrode plate uses the above negative electrode active material, and the negative electrode active material has good electron conduction function, allowing the negative electrode plate to require little or no additional conductive agent. For example, the negative electrode plate does not contain a conductive agent (for example, carbon black, acetylene black, Ketjen black, super conductive carbon, carbon dots, carbon nanotubes, carbon fibers, graphene, or any combination thereof).

In some embodiments, the negative electrode current collector may be any material suitable for use as a negative electrode current collector for lithium-ion secondary batteries, and the negative electrode current collector may be a metal foil or a composite current collector. Optionally, the negative electrode current collector includes: copper foil, aluminum foil, nickel foil, stainless steel foil, titanium foil, nickel foam, copper foam, a polymer substrate coated with conductive metal, or any combination thereof.

In some embodiments, the negative electrode active material layer further includes a binder, where the binder includes, but is not limited to: polyvinyl alcohol, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber (SBR), acrylic (esterified) styrene-butadiene rubber, epoxy resin, nylon, or any combination thereof.

In some embodiments, the negative electrode active material layer may optionally include other additives, such as a thickener (for example, sodium carboxymethyl cellulose (CMC-Na)).

According to some embodiments of the present application, under a load of 25 MPa, the negative electrode plate has a conductivity of 1 S/cm to 10 S/cm; and optionally, the conductivity is 5 S/cm to 10 S/cm. For example, the conductivity of the negative electrode plate may be 1 S/cm, 2 S/cm, 3 S/cm, 4 S/cm, 5 S/cm, 6 S/cm, 7 S/cm, 8 S/cm, 9 S/cm, 10 S/cm, or any intermediate conductivity value between any two of these values.

According to some embodiments of the present application, the OI value of the negative electrode plate is 11 to 21. For example, the OI value of the negative electrode plate may be 11, 12, 13, 14, 15, 16, 17, 18, 19, 20, 21, or any intermediate value between any two of these values.

According to some embodiments of the present application, the preparation method of the negative electrode plate includes the following steps: Mix the negative electrode active material, binder, and thickener in a weight ratio of 95-98:1-3:1-3, and thoroughly stir and mix the mixture with an appropriate amount of deionized water solvent to form a uniform negative electrode slurry; apply the slurry onto a current collector, and dry, and cold press it to obtain the negative electrode plate. In some embodiments, the conductivity and OI value of the negative electrode plate may be controlled by selecting the negative electrode active material, or the conductivity and OI value of the negative electrode plate may be controlled by controlling the compacted density of the electrode plate, where higher compacted density results in higher conductivity and higher OI value.

According to some embodiments of the present application, the battery includes a secondary battery, which may be the aforementioned battery cell or battery pack. According to some embodiments of the present application, the battery of the present application includes, but is not limited to, lithium-ion batteries or sodium-ion batteries.

To provide a clearer understanding of the technical solution of the present application, in some embodiments of the present application, lithium-ion batteries are mainly used for illustration, and other types of batteries can be appropriately adjusted based on the battery type and will not be described in detail.

The lithium-ion battery includes a positive electrode plate, the aforementioned negative electrode plate, a separator, and an electrolyte.

[Positive electrode plate]

According to some embodiments of the present application, the positive electrode plate includes a positive electrode current collector and a positive electrode active material layer, where the positive electrode active material layer includes a positive electrode active material, a binder, and a conductive agent.

In some embodiments, the positive electrode current collector may be a metal foil or a composite current collector. For example, aluminum foil may be used. The composite current collector may be formed by forming a metal material (copper, copper alloy, nickel, nickel alloy, titanium, titanium alloy, silver, silver alloy, or the like) on a polymer substrate.

In some embodiments, the positive electrode active material includes at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate.

In some embodiments, the binder includes a binder polymer, such as at least one of polyvinylidene fluoride, polytetrafluoroethylene, polyolefins, sodium carboxymethyl cellulose, lithium carboxymethyl cellulose, modified polyvinylidene fluoride, modified SBR rubber, or polyurethane. In some embodiments, the polyolefin binder includes at least one of polyethylene, polypropylene, polyester, polyalkenol, or polyacrylic acid.

In some embodiments, the conductive agent includes carbon-based materials, such as natural graphite, artificial graphite, carbon black, acetylene black, Ketjen black, or carbon fibers; metal-based materials, such as metal powders or fibers of copper, nickel, aluminum, or silver; conductive polymers, such as polyphenylene derivatives; or mixtures thereof.

[Separator]

The present application does not impose particular restrictions on the material or shape of the separator, which may be any technology disclosed in the prior art.

In some embodiments, the separator includes a polymer or inorganic material formed from a material stable to the electrolyte of the present application. For example, the separator may include a substrate layer and a surface treatment layer.

The substrate layer is a non-woven fabric, a film, or a composite film with a porous structure, and the material of the substrate layer is selected from at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be used.

A surface treatment layer is provided on at least one surface of the substrate layer, where the surface treatment layer may be a polymer layer, an inorganic layer, or a layer formed by mixing a polymer and an inorganic material. The inorganic layer includes inorganic particles and a binder, where the inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The polymer layer contains a polymer, where the polymer material is selected from at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

[Electrolyte]

The electrolyte conducts ions between the positive electrode plate and the negative electrode plate.

The electrolyte of the present application may be any electrolyte known in the prior art.

In some embodiments, the electrolyte includes an organic solvent, a lithium salt, and optional additives. The organic solvent in the electrolyte of the present application may be any organic solvent known in the prior art suitable for use as an electrolyte solvent. The electrolytic salt used in the electrolyte of the present application is not limited and may be any electrolytic salt known in the prior art. The additives in the electrolyte of the present application may be any additives known in the prior art suitable for use as electrolyte additives. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, methyl propionate, propyl propionate, or ethyl propionate. In some embodiments, the organic solvent includes ether solvents, such as at least one of 1,3-dioxolane (DOL) or ethylene glycol dimethyl ether (DME). In some embodiments, the lithium salt includes at least one of organic lithium salt or inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bis(trifluoromethanesulfonyl)imide (($LiN(CF_3SO_2)_2$, LiTFSI), lithium bis(fluorosulfonyl)imide (($LiN(SO_2F)_2$, LiFSI), lithium bis(oxalate)borate ($LiB(C_2O_4)_2$, LiBOB), or lithium difluoro(oxalate)borate ($LiBF_2(C_2O_4)$, LiDFOB). In some embodiments, the additives include at least one of fluoroethylene carbonate, succinonitrile, glutaronitrile, 1,3-propane sultone, or adiponitrile.

According to some embodiments of the present application, the negative electrode plate without a conductive agent is assembled into a battery, and the battery has good kinetic performance and relatively low impedance, and can sustain high-rate discharge at low temperatures. The battery can perform 10C high-rate discharge at - 20°C, and its capacity retention rate relative to 10C high-rate discharge at 25°C is as high as 80% or more, significantly improving the low-temperature endurance capability of the battery.

According to some embodiments of the present application, the present application also provides an electric device including the battery described in any of the above embodiments, where the battery is used to provide electric energy for the electric device.

The electric device may be any equipment or system that uses the battery described above. This includes, but is not limited to, laptops, pen-input computers, mobile computers, e-book readers, portable phones, portable fax machines, portable copiers, portable printers, head-mounted stereo headsets, video recorders, LCD TVs, portable cleaners, portable CD players, mini discs, transceivers, electronic notebooks, calculators, memory cards, portable recorders, radios, backup power supplies, motors, automobiles, motorcycles, electric bicycles, bicycles, lighting fixtures, toys, game consoles, clocks, electric tools, flashlights, cameras, large household batteries, and lithium-ion capacitors.

The following describes one or more embodiments in more detail with reference to examples below. Certainly, these examples do not limit the scope of the one or more embodiments.

**Example 1-1**

Preparation of negative electrode active material

(1) Flaky graphite with 95% purity was crushed to a particle size $D_v50$ of approximately 6 $\mu$m.
(2) The crushed flaky graphite was shaped for 20 min (a specific surface area of the flaky graphite was b' $m^2/g$, and the tap density was T' $g/cm^3$).
(3) The above sample was mixed with a pitch coating agent at a mixing ratio of 98%:2%, and the mixed sample was placed in a reactor and heat-treated at 500°C for 2 h to achieve coating.
(4) The heat-treated sample was further graphitized at a graphitization treatment temperature of 2500°C for 24 h (a graphitization degree of the treated sample was G %, and a Raman Id/Ig value was obtained).
(5) The graphitized sample was sieved and demagnetized to obtain a negative electrode active material.

Scanning electron microscope (SEM) testing: A scanning electron microscope used in the examples of the present application was a JSM-6360LV model from JEOL, equipped with an X-ray energy spectrometer, and the morphology and structure of the sample were analyzed to observe its morphological characteristics.
The SEM image of the negative electrode active material prepared in this example is shown in FIG. 1. From FIG. 1, it can be seen that the negative electrode active material had a small-particle flaky morphology structure.

Preparation of lithium-ion battery

Negative electrode plate: The prepared negative electrode active material, binder styrene-butadiene rubber (SBR), and thickener sodium carboxymethyl cellulose (CMC) were mixed in a weight ratio of 97.4:1.2:1.4, and thoroughly stirred and mixed with an appropriate amount of deionized water to form a uniform negative electrode slurry. The slurry was applied to a copper foil current collector, dried, and cold-pressed to obtain a negative electrode plate (a conductivity of the negative electrode plate was 1 S/cm to 10 S/cm, and an OI value was 11 to 21).
Positive electrode plate: $Ni_{0.83}Co_{0.07}Mn_{0.1}$ was selected as a positive electrode active material, mixed with conductive agent acetylene black and binder polyvinylidene fluoride (PVDF) in a weight ratio of 96.3:2.2:1.5 in an appropriate amount of N-methylpyrrolidone (NMP) solvent, and thoroughly stirred and mixed to form a uniform positive electrode slurry. The slurry was applied to an aluminum foil current collector, dried, and cold-pressed to obtain a positive electrode plate.
Electrolyte: In a dry argon atmosphere glovebox, ethylene carbonate (EC), propylene carbonate (PC), propyl propionate (PP), and ethyl propionate (EP) were mixed in a mass ratio of EC:PC:PP:EP = 4:3:2: 1; and fluoroethylene carbonate and 1,3-propane sultone were then added, dissolved, and thoroughly stirred, followed by the addition of lithium salt $LiPF_6$, and mixed well to obtain an electrolyte. A mass percentage of $LiPF_6$ was 12.5%, a mass percentage of fluoroethylene carbonate was 3%, and a mass percentage of 1,3-propane sultone was 2%, with the mass percentage of each substance calculated based on a mass of the electrolyte.
Lithium-ion battery: The positive electrode plate, separator, and negative electrode plate were stacked in sequence, with the separator placed between the positive electrode plate and negative electrode plate for isolation, and wound to obtain an electrode assembly. The electrode assembly was placed in an aluminum-plastic film outer packaging, moisture was removed at 80°C, the above electrolyte was injected, and the assembly was sealed. After formation, degassing, and trimming processes, the lithium-ion battery was obtained.
Experiment 1: Based on Example 1-1, the crushing particle size, shaping time, pitch coating ratio, heat treatment temperature and time, and graphitization treatment temperature and time during the preparation of the negative electrode active material were adjusted. The specific process parameters are shown in Table 1, resulting in Examples 1-2 to 1-9 and Comparative Examples 1-1 and 1-2, with specific test result parameters shown in Table 4.

**Table 1: Preparation process parameters for experiment 1**

| Example and comparative example | Crushing particle size | Shaping time | Pitch coating ratio | Heat treatment temperature | Heat treatment time | Graphitization treatment temperature | Graphitization treatment time |
|---|---|---|---|---|---|---|---|
| Example 1-1 | 6 $\mu$m | 20 min | 2% | 500°C | 2 h | 2500°C | 24 h |

(continued)

| Example and comparative example | Crushing particle size | Shaping time | Pitch coating ratio | Heat treatment temperature | Heat treatment time | Graphitization treatment temperature | Graphitization treatment time |
|---|---|---|---|---|---|---|---|
| Example 1-2 | 2 μm | 20 min | 2% | 500°C | 2 h | 2500°C | 24 h |
| Example 1-3 | 4 μm | 20 min | 2% | 500°C | 2 h | 2500°C | 24 h |
| Example 1-4 | 8 μm | 20 min | 2% | 500°C | 2 h | 2500°C | 24 h |
| Example 1-5 | 10 μm | 20 min | 2% | 500°C | 2 h | 2500°C | 24 h |
| Example 1-6 | 6 μm | 20 min | 4% | 800°C | 2 h | 2500°C | 24 h |
| Example 1-7 | 6 μm | 20 min | 4% | 800°C | 2 h | 2800°C | 24 h |
| Example 1-8 | 2 μm | 30 min | 4% | 800°C | 2 h | 2800°C | 24 h |
| Example 1-9 | 13 μm | 15 min | 2% | 500°C | 2 h | 2500°C | 24 h |
| Comparative Example 1-1 | 2 μm | 30 min | 7% | 500°C | 2 h | 2500°C | 24 h |
| Comparative Example 1-2 | 8 μm | 30 min | 6% | 500°C | 2 h | 2800°C | 36 h |

Experiment 2: Based on Example 1-1, the crushing particle size, shaping time, pitch coating ratio, heat treatment temperature and time, and graphitization treatment temperature and time during the preparation of the negative electrode active material were adjusted. The specific process parameters are shown in Table 2, resulting in Examples 2-1 to 2-6, with specific parameter data shown in Table 5.

**Table 2: Preparation process parameters for experiment 2**

| Example and comparative example | Crushing particle size | Shaping time | Pitch coating ratio | Heat treatment temperature | Heat treatment time | Graphitization treatment temperature | Graphitization treatment time |
|---|---|---|---|---|---|---|---|
| Example 1-1 | 6 μm | 20 min | 2% | 500°C | 2h | 2500°C | 24 h |
| Example 2-1 | 3 μm | 30 min | 2% | 800°C | 2h | 2800°C | 24 h |
| Example 2-2 | 5 μm | 30 min | 3% | 500°C | 2h | 2800°C | 20 h |
| Example 2-3 | 8 μm | 30 min | 3% | 500°C | 4h | 3000°C | 24 h |
| Example 2-4 | 10 μm | 30 min | 4% | 800°C | 2h | 3000°C | 24 h |
| Example 2-5 | 12 μm | 30 min | 4% | 800°C | 2h | 3000°C | 36 h |
| Example 2-6 | 14 μm | 30 min | 4% | 800°C | 2h | 3000°C | 38 h |

Experiment 3: Based on Example 1-1, the crushing particle size, shaping time, pitch coating ratio, heat treatment temperature and time, and graphitization treatment temperature and time during the preparation of the negative electrode active material were adjusted. The specific process parameters are shown in Table 3, resulting in Examples 3-1 to 3-7, where the particle size $D_v50$ (a μm), specific surface area (b $m^2/g$), and tap density (T $g/cm^3$) of the negative electrode active material in these examples were the same, with specific parameter data shown in Table 6.

**Table 3: Preparation process parameters for experiment 3**

| Example and comparative example | Crushing particle size | Shaping time | Pitch coating ratio | Heat treatment temperature | Heat treatment time | Graphitization treatment temperature | Graphitization treatment time |
|---|---|---|---|---|---|---|---|
| Example 1-1 | 6 μm | 20 min | 2% | 500°C | 2 h | 2500°C | 24 h |
| Example 3-1 | 6 μm | 20 min | 2% | 800°C | 4h | 2500°C | 24 h |
| Example 3-2 | 6 μm | 20 min | 2% | 800°C | 6h | 2500°C | 24 h |

(continued)

| Example and comparative example | Crushing particle size | Shaping time | Pitch coating ratio | Heat treatment temperature | Heat treatment time | Graphitization treatment temperature | Graphitization treatment time |
|---|---|---|---|---|---|---|---|
| Example 3-3 | 6 μm | 20 min | 2% | 500°C | 2 h | 2800°C | 24 h |
| Example 3-4 | 6 μm | 20 min | 2% | 500°C | 2 h | 3000°C | 36 h |
| Example 3-5 | 6 μm | 20 min | 4% | 500°C | 2 h | 3000°C | 36 h |
| Example 3-6 | 6 μm | 20 min | 1% | 900°C | 6h | 3000°C | 36 h |
| Example 3-7 | 6 μm | 20 min | 2% | 500°C | 2 h | 2200°C | 24 h |

**Test methods**

The lithium-ion battery was discharged at a constant current of 1C to a voltage of 3.0 V and disassembled, and the negative electrode plate was removed. The negative electrode plate was soaked in dimethyl carbonate (DMC) for 20 min, then rinsed sequentially with DMC and acetone once each, and subsequently placed in an oven and baked at 80°C for 12 h to obtain a treated negative electrode plate. The powder on the negative electrode plate was scraped off with a scraper, and the scraped powder was heat-treated in a tube furnace at 400°C for 4 h under argon protection to obtain the negative electrode active material.

The following tests were performed on the obtained negative electrode active material and negative electrode plate:

**1. Particle size testing**

The particle size testing method for the negative electrode active material was conducted in accordance with GB/T 19077-2016. Specifically, 1 g of the sample was weighed and well mixed with 20 mL of deionized water and a trace amount of dispersant. The mixture was sonicated in an ultrasonic device for 5 min, and then the solution was poured into the Hydro 2000SM injection system for testing. The test equipment used was the Mastersizer 3000 manufactured by Malvern. During the testing process, the particle size was measured by determining the intensity of scattered light as a laser beam passed through the dispersed particle sample. The data was then used to analyze and calculate the particle size distribution forming the scattering spectrum. The refractive index was set to 1.8, and each sample was tested three times, with the particle size $D_v50$ determined as the average of the three tests.

**2. Specific surface area testing**

The specific surface area testing method was conducted in accordance with GB/T 19587-2017. Specifically, 1 g to 8 g of the negative electrode active material (the minimum amount of negative electrode active material at least occupied 1/3 of the spherical bulb volume) was weighed and placed in a 1/2-inch long tube with a bulb (the diameter of the bulb portion was 12 mm). After pretreatment at 200°C for 2 h, the sample was placed in the TriStar 3030 test equipment (Micromeritics, USA) for testing. The adsorption gas used was $N_2$ (purity: 99.999%), and the test was conducted at 77 K, with the specific surface area calculated using the BET method.

**3. Tap density testing**

The tap density testing method was conducted in accordance with GB/T 5162-2006 "Determination of Tap Density of Metal Powders," using the GeoPyc 1365 equipment from Micromeritics. A sample of 3 ± 0.1 g of the negative electrode active material was weighed, with a consolidation force of 85 N.

**4. Graphitization degree testing**

The graphitization degree testing was conducted in accordance with the national standard JJS K 0131-1996 "General Rules for X-ray Diffraction Analysis." The instrument model was Bruker D8 ADVANCE, with a Cu Kα target, 40 kV/40 mA voltage and current, and a test angle of 52° to 58°. The negative electrode active material with a carbon-to-silicon ratio of C:Si = 5:1 (mass ratio) was scanned, with a step time of 0.3 s.

### 5. Compacted density testing

The compacted density testing standard was conducted in accordance with GB/T 24533-2009 "Graphite Negative Electrode Materials for Lithium-Ion Batteries." Specifically, 1.0000 ± 0.0500 g of the negative electrode active material was weighed and placed in a test mold (CARVER#3619, with 13 mm). The negative electrode active material was then placed in the test equipment, and the test equipment was the Sansi Zongheng UTM7305, with a test tonnage of 5.0 tons. The compacted density was calculated using the formula: compacted density = mass of negative electrode active material/force area of negative electrode active material/thickness of negative electrode active material.

### 6. Id/Ig (Raman surface defect degree) testing

The negative electrode active material was scanned and tested using a laser confocal Raman spectrometer (Raman, HR Evolution, HORIBA Scientific). A scanning region of 100 $\mu$m×100 $\mu$m was randomly selected, and the particles within this region were scanned to obtain the D peak and G peak of all particles in the region. The data was processed using LabSpec software to obtain the peak intensities of the D peak and G peak for each particle, denoted as Id and Ig, respectively. The laser wavelength of the Raman spectrometer ranged from 532 nm to 785 nm. The Id/Ig value in the present application was determined as the average of the Id/Ig ratios of all particles measured within this range.

### 7. Negative electrode plate conductivity testing

The testing procedure was conducted in accordance with the standard GB/T 30385-2014 "Carbon Composite Lithium Iron Phosphate Positive Electrode Materials for Lithium-Ion Batteries." The negative electrode plate was weighed and placed on an electronic pressure platform, then pressurized at a rate of 5 mm/min to a load of 25 MPa, held for 60s, and depressurized to 0 to obtain a conductivity of the electrode plate.

### 8. Negative electrode plate OI value testing

The OI value testing was conducted in accordance with the national standard JJS K 0131-1996 "General Rules for X-ray Diffraction Analysis." The instrument model was Bruker D8 ADVANCE, with a Cu K$\alpha$ target, 40 KV/40 mA voltage and current. The negative electrode plate was scanned to obtain C004 peak and C110 peak data, and the C004/C110 ratio was calculated to obtain the OI value of the negative electrode plate.

The following performance tests were conducted on the obtained lithium-ion battery:

### 1. Lithium-ion battery 1s DCR testing

At -20°C, the lithium-ion battery was charged at a constant current of 1C to 4.25 V, then charged at a constant voltage of 4.25 V to a current 0.05C, and left to stand for 30 min. The battery was discharged at 0.1C for 10s, and the voltage was recorded as U1; then discharged at 1C for 360s, and the voltage was recorded as U2. The charge-discharge steps were repeated 5 times. "1C" refers to the current value obtained after the lithium-ion battery capacity was fully discharged in 1 h.

The DC resistance R of the lithium-ion battery at 25°C was calculated using the formula:

$$R = (U2-U1)/(1C-0.1C).$$

Unless otherwise specified, the DCR in the present application refers to the DC resistance of the lithium-ion battery at 50% state of charge (SOC).

### 2. Lithium-ion battery capacity retention rate testing

The lithium-ion battery was placed in a high-low temperature chamber, and the ambient temperature was adjusted to 25°C. The battery was charged at a constant current of 0.2C to 4.25 V, then charged at a constant voltage of 4.25 V to 0.05C, and left to stand for 5 min. The battery was then discharged at 0.2C to 3 V to obtain the 25°C 0.2C capacity.

The charging steps were repeated, with the battery charged at a constant current of 0.2C to 4.25 V, then charged at a constant voltage of 4.25 V to 0.05C. The ambient temperature was adjusted to -20°C, and the battery was left to stand for 30 min, then discharged at 10C to 3 V to obtain a 10C capacity at -20°C. The 10C discharge capacity retention rate of the lithium-ion battery was calculated using the formula:

10C capacity retention rate at -20°C = (10C discharge capacity at - 20°C/0.2C discharge capacity at 25°C) × 100%.

The test results are shown in Tables 4 to 6:

**Table 4: Test results for experiment 1**

| Example and comparative example | Negative electrode active material | | | | | | | | Lithium-ion battery | |
|---|---|---|---|---|---|---|---|---|---|---|
| | a | b | T | G | 2.5×a+b | T-0.05×a | P | Id/Ig | 1s DCR | 10C capacity retention |
| | (μm) | (m²/g) | (g/cm³) | | | | (g/cm³) | | (mΩ) | |
| Example 1-1 | 6 | 16.1 | 0.7 | 94.0% | 31.1 | 0.4 | 1.80 | 0.30 | 60.5 | 89.2% |
| Example 1-2 | 2 | 24.8 | 0.5 | 94.7% | 29.8 | 0.4 | 1.76 | 0.33 | 69.2 | 86.1% |
| Example 1-3 | 4 | 20.2 | 0.6 | 95.6% | 30.2 | 0.4 | 1.78 | 0.31 | 67.5 | 87.0% |
| Example 1-4 | 8 | 14.9 | 0.7 | 94.3% | 34.9 | 0.3 | 1.86 | 0.26 | 68.3 | 86.4% |
| Example 1-5 | 10 | 13.9 | 0.8 | 95.1% | 38.9 | 0.3 | 1.92 | 0.21 | 72.9 | 85.8% |
| Example 1-6 | 6 | 17.9 | 0.7 | 94.1% | 32.9 | 0.4 | 1.82 | 0.24 | 65.4 | 87.2% |
| Example 1-7 | 6 | 14.2 | 0.7 | 94.3% | 29.2 | 0.4 | 1.88 | 0.23 | 62.1 | 88.8% |
| Example 1-8 | 2 | 20 | 0.6 | 94.8% | 25.0 | 0.5 | 1.78 | 0.26 | 68.2 | 86.4% |
| Example 1-9 | 13 | 7.5 | 0.9 | 95.8% | 40 | 0.25 | 2.02 | 0.14 | 75.9 | 85.0% |
| Comparative Example 1-1 | 2 | 4.1 | 0.4 | 93.5% | 9.1 | 0.3 | 1.80 | 0.21 | 102.4 | 70.7% |
| Comparative Example 1-2 | 8 | 22 | 0.6 | 96.7% | 42 | 0.2 | 1.82 | 0.28 | 121.1 | 67.8% |

From Table 4, it can be seen that as compared to Comparative Examples 1-1 and 1-2, when the particle size $D_v50$ (a μm) and specific surface area BET (b m²/g) of the negative electrode active material in Examples 1-1 to 1-9 satisfy $20 \leq 2.5 \times a + b \leq 40$, the lithium-ion battery made with this negative electrode active material has a lower 1s DCR, can discharge at a low temperature of -20°C, and can increase the 10C discharge capacity retention rate at low temperatures. The negative electrode active material satisfying this condition has complete crystal growth and few surface defects, allowing rapid electron conduction within particles. Additionally, the high specific surface area ensures good contact between particles, resulting in a good electron conduction network throughout the electrode plate; at low temperatures, a good conductive network can reduce discharge polarization of the lithium-ion battery at high rates and low temperature, thereby reducing the 1s DCR of the lithium-ion battery and increasing the 10C discharge capacity retention rate at low temperatures.

According to Examples 1-1 to 1-7, when $2 \leq a \leq 10$, $10 \leq b \leq 25$, and $20 \leq 2.5 \times a + b \leq 40$, the 1s DCR of the lithium-ion battery is significantly reduced, and the 10C discharge capacity retention rate at low temperatures is significantly improved.

**Table 5: Test results for experiment 2**

| Example | Negative electrode active material | | | | | | | | Negative electrode plate | Lithium-ion battery | |
|---|---|---|---|---|---|---|---|---|---|---|---|
| | a | b | T | G | 2.5×a+b | T-0.05×a | P | Id/Ig | OI value | 1s DCR | 10C capacity retentio n |
| | (μm) | (m²/g) | (g/cm³) | | | | (g/cm³) | | | (mΩ) | |
| Example 1-1 | 6 | 16.1 | 0.7 | 94.0% | 31.1 | 0.4 | 1.80 | 0.30 | 20.9 | 60.5 | 89.2% |
| Example 2-1 | 3 | 21.2 | 0.8 | 96.5% | 28.7 | 0.65 | 1.82 | 0.30 | 13.9 | 54.2 | 94.5% |

(continued)

| Example | Negative electrode active material | | | | | | | | Negative electrode plate | Lithium-ion battery | |
|---|---|---|---|---|---|---|---|---|---|---|---|
| | a | b | T | G | 2.5×a+b | T-0.05×a | P | Id/Ig | OI value | 1s DCR | 10C capacity retentio n |
| | (μm) | (m²/g) | (g/cm³) | | | | (g/cm³) | | | (mΩ) | |
| Example 2-2 | 5 | 17.9 | 0.75 | 96.9% | 30.4 | 0.5 | 1.85 | 0.31 | 15.4 | 58.2 | 90.2% |
| Example 2-3 | 8 | 14.6 | 1.0 | 97.2% | 34.6 | 0.6 | 1.92 | 0.22 | 18.4 | 55.6 | 93.1% |
| Example 2-4 | 10 | 12.5 | 1.2 | 97.5% | 37.5 | 0.7 | 1.91 | 0.22 | 19.2 | 57.6 | 91.5% |
| Example 2-5 | 12 | 10 | 1.4 | 97.6% | 40 | 0.8 | 1.94 | 0.21 | 18.9 | 59.1 | 89.4% |
| Example 2-6 | 14 | 8.3 | 1.7 | 97.7% | 43.3 | 1.0 | 1.96 | 0.23 | 19.3 | 61.4 | 88.4% |

From Table 5, it can be seen that as compared to Example 1-1, when the particle size (a μm) and tap density T (g/cm³) of the negative electrode active material in Examples 2-1 to 2-6 satisfy $0.3 \leq T - 0.05 \times a \leq 1.0$, the low-temperature high-rate discharge capability of the lithium-ion battery is improved. The negative electrode active material particles satisfying this condition can be densely packed during coating, resulting in a negative electrode plate with a low OI value, and improved conductivity and lithium-ion diffusion performance of the negative electrode plate, thereby improving the low-temperature high-rate discharge capability of the lithium-ion battery.

According to Examples 2-1 to 2-4, when $0.5 \leq T \leq 1.4$ and $0.3 \leq T - 0.05 \times a \leq 1.0$ are both satisfied, the 1s DCR of the lithium-ion battery is reduced, and the 10C discharge capacity retention rate at low temperatures is significantly improved.

**Table 6: Test results for experiment 3**

| Example | Negative electrode active material | | | Negative electrode plate | Lithium-ion battery | |
|---|---|---|---|---|---|---|
| | G | P | Id/Ig | Conductivity | 1s DCR | 10C capacity retention |
| | | (g/cm³) | | (S/cm) | (mΩ) | |
| Example 1-1 | 94.0% | 1.78 | 0.33 | 3.54 | 60.5 | 89.20% |
| Example 3-1 | 94.5% | 1.80 | 0.28 | 4.58 | 56.9 | 92.10% |
| Example 3-2 | 95.5% | 1.93 | 0.21 | 6.77 | 54.8 | 92.90% |
| Example 3-3 | 96.5% | 2.08 | 0.15 | 8.42 | 48.6 | 94.50% |
| Example 3-4 | 97.5% | 2.11 | 0.11 | 9.86 | 44.2 | 96.60% |
| Example 3-5 | 98.5% | 1.78 | 0.33 | 3.54 | 54.1 | 92.80% |
| Example 3-6 | 94.0% | 1.88 | 0.11 | 3.54 | 50.8 | 93.40% |
| Example 3-7 | 94.0% | 2.17 | 0.33 | 3.54 | 48.2 | 93.70% |

From Table 6, it can be seen that as compared to Example 1-1, when the graphitization degree of the negative electrode active material in Examples 3-1 to 3-7 is higher, the Id/Ig value is lower, with fewer surface defects, more complete crystal growth, and better electron conduction within the particles. The conductivity of the negative electrode plate is improved, electrons can conduct at low temperatures, the voltage polarization caused by high-rate discharge at low temperatures in the lithium-ion battery is reduced, and the discharge capability of the lithium-ion battery is improved.

These embodiments described above are only some embodiments of the present application, not all embodiments. The detailed description of these embodiments of the present application is not intended to limit the scope of protection claimed by the present application but merely represents selected embodiments of the present application. Based on these embodiments in the present application, all other embodiments obtained by those skilled in the art without creative efforts fall within the scope of protection of the present application.

**Claims**

1.  A negative electrode active material, wherein a particle size $D_v50$ of the negative electrode active material is a $\mu$m, a specific surface area is b $m^2/g$, and $20 \leq 2.5 \times a + b \leq 40$.

2.  The negative electrode active material according to claim 1, wherein $25 \leq 2.5 \times a + b \leq 35$.

3.  The negative electrode active material according to claim 1 or 2, wherein $2 \leq a \leq 10$; and optionally, $2 \leq a \leq 8$.

4.  The negative electrode active material according to any one of claims 1 to 3, wherein $10 \leq b \leq 25$; and optionally, $13 \leq b \leq 20$.

5.  The negative electrode active material according to any one of claims 1 to 4, wherein a tap density of the negative electrode active material is T $g/cm^3$, and $0.3 \leq T - 0.05 \times a \leq 1.0$; and optionally, $0.5 \leq T - 0.05 \times a \leq 0.8$.

6.  The negative electrode active material according to claim 5, wherein $0.5 \leq T \leq 1.4$; and optionally, $0.9 \leq T \leq 1.2$.

7.  The negative electrode active material according to any one of claims 1 to 6, wherein a graphitization degree of the negative electrode active material is G %, and $94.0 \leq G \leq 98.5$; and optionally, $95.0 \leq G \leq 97.5$.

8.  The negative electrode active material according to any one of claims 1 to 7, wherein a compacted density of the negative electrode active material is P $g/cm^3$, and $1.75 \leq P \leq 2.20$; and optionally, $1.90 \leq P \leq 2.10$.

9.  The negative electrode active material according to any one of claims 1 to 8, wherein an Id/Ig of the negative electrode active material is 0.1 to 0.35.

10. The negative electrode active material according to any one of claims 1 to 9, wherein the negative electrode active material comprises a flaky structure material, and a mass proportion of the flaky structure material in the negative electrode active material is 90% to 100%.

11. The negative electrode active material according to any one of claims 1 to 10, wherein the negative electrode active material comprises a carbon material; and optionally, the negative electrode active material comprises flaky graphite with a carbon coating layer.

12. A battery, comprising a positive electrode plate, a negative electrode plate, and an electrolyte; wherein the negative electrode plate comprises a negative electrode current collector and a negative electrode active material layer disposed on at least one surface of the negative electrode current collector, the negative electrode active material layer comprising the negative electrode active material according to any one of claims 1 to 11.

13. The battery according to claim 12, wherein under a load of 25 MPa, the negative electrode plate has a conductivity of 1 S/cm to 10 S/cm; and optionally, the conductivity is 5 S/cm to 10 S/cm.

14. The battery according to claim 12 or 13, wherein an OI value of the negative electrode plate is 11 to 21.

15. An electric device, comprising the battery according to any one of claims 12 to 14.

FIG. 1

## INTERNATIONAL SEARCH REPORT

| International application No. |
| --- |
| **PCT/CN2024/108241** |

| A. | CLASSIFICATION OF SUBJECT MATTER |
| --- | --- |

H01M4/36(2006.01)i; H01M4/62(2006.01)i; H01M4/48(2010.01)i; H01M4/58(2010.01)i; H01M4/13(2010.01)i

According to International Patent Classification (IPC) or to both national classification and IPC

| B. | FIELDS SEARCHED |
| --- | --- |

Minimum documentation searched (classification system followed by classification symbols)

IPC:H01M4/-

Documentation searched other than minimum documentation to the extent that such documents are included in the fields searched

Electronic data base consulted during the international search (name of data base and, where practicable, search terms used)

CNABS, CNTXT, ENTXTC, DWPI, CJFD: 比表, 电导率, 负极活性, 粒度, 破碎, 压实密度, 振实密度, BET, conductivity, negative electrode activity, particle size, Dv50

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116826019 A (NINGDE AMPEREX TECHNOLOGY LTD.) 29 September 2023 (2023-09-29)<br>      claims 1-16 | 1-15 |
| X | CN 113875047 A (CONTEMPORARY AMPEREX TECHNOLOGY CO., LTD.) 31 December 2021 (2021-12-31)<br>      description, paragraphs 39-68, 112, and 139 | 1, 2, 5-15 |
| X | CN 110642247 A (GUANGDONG KAIJIN NEW ENERGY TECHNOLOGY CO., LTD.) 03 January 2020 (2020-01-03)<br>      description, comparative embodiment 1 | 1, 3, 10, 11 |
| X | CN 115744894 A (SHANXI QINXIN ENERGY GROUP CO., LTD.) 07 March 2023 (2023-03-07)<br>      description, embodiment 1 | 1, 5, 6, 10, 11 |
| X | CN 116487527 A (NINGDE AMPEREX TECHNOLOGY LTD.) 25 July 2023 (2023-07-25)<br>      description, paragraphs 27-60 | 1, 5, 6, 10-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 September 2024** | **15 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/108241** |

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2023092274 A1 (DONGGUAN AMPEREX TECHNOLOGY LIMITED) 01 June 2023 (2023-06-01)<br>    description, paragraphs 5-40 | 1-3, 8, 10-15 |
| A | WO 2022205154 A1 (NINGDE AMPEREX TECHNOLOGY LTD.) 06 October 2022 (2022-10-06)<br>    description, embodiment 1 | 1-15 |
| A | CN 106848316 A (YAAN QIANRUN LITHIUM BATTERY MATERIAL CO., LTD.) 13 June 2017 (2017-06-13)<br>    description, paragraphs 7-19 | 1-15 |

Form PCT/ISA/210 (second sheet) (July 2022)

**INTERNATIONAL SEARCH REPORT**
Information on patent family members

International application No.

**PCT/CN2024/108241**

| Patent document cited in search report | | | Publication date (day/month/year) | Patent family member(s) | Publication date (day/month/year) |
|---|---|---|---|---|---|
| CN | 116826019 | A | 29 September 2023 | None | |
| CN | 113875047 | A | 31 December 2021 | None | |
| CN | 110642247 | A | 03 January 2020 | None | |
| CN | 115744894 | A | 07 March 2023 | None | |
| CN | 116487527 | A | 25 July 2023 | None | |
| WO | 2023092274 | A1 | 01 June 2023 | None | |
| WO | 2022205154 | A1 | 06 October 2022 | None | |
| CN | 106848316 | A | 13 June 2017 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310980528